# EUROPÄISCHE PATENTANMELDUNG

(11) **EP 0 767 372 A1**
(43) Veröffentlichungstag der Anmeldung: **09.04.1997**
(21) Anmeldenummer: 96810586.6
(22) Anmeldetag: 06.09.1996
(51) Int. Cl.: G01N 27/333

(54) **Ionenselektive Elektrode**

(30) Priorität: 06.10.1995 CH 2821/95
(71) Anmelder: METROHM AG, 9100 Herisau (CH)
(72) Erfinder: Hürlimann, Walter, 9100 Herisau (CH); Bruttel, Peter, 9100 Herisau (CH)
(74) Vertreter: Hepp, Dieter

(57) **Zusammenfassung**

Eine ionenselektive Elektrode zum potentiometrischen Bestimmen der Konzentration eines bestimmten Ions in einer Lösung besteht aus einem Elektrodenkörper (2), welcher mit einer ionenspezifischen Membran (3) beschichtet ist. Der Elektrodenkörper (2) besteht aus einem Kohlenstoffaser-Kunststoff-Mischung. Damit das Potential an der Innenseite der Membran (3) von dem Elektrodenkörper (2) weitergeleitet werden kann, weist die Oberfläche (6) des Elektrodenkörpers (2) unbeschichtete, freiliegende Faserabschnitte (7) auf, die in elektrischem Leitkontakt mit der Innenfläche der ionenspezifischen Membran (3) stehen.

## Beschreibung

Die Erfindung betrifft eine ionenselektive Elektrode zum potentiometrischen Bestimmen der Konzentration eines bestimmten Ions in einer Lösung gemäss dem Oberbegriff von Anspruch 1, sowie ein Verfahren zu seiner Herstellung. Mit ionenselektiven Elektroden können bestimmte Ionen in Gegenwart anderer Ionen selektiv ermittelt werden. Beim potentiometrischen Bestimmen der Ionenkonzentration in einer Lösung wird das durch ein bestimmtes Ion erzeugte elektrische Potential gemessen. Prinzipiell weisen ionenselektive Elektroden einen Elektrodenkörper auf, der durch eine ionenspezifische Membran von der Messlösung getrennt ist.

Ionenselektive Elektroden werden häufig zu Routineuntersuchungen in Laboratorien oder im Umweltschutz verwendet. Ihnen kommt unter anderem eine grosse Bedeutung bei der Messung von Tensidkonzentrationen zu. Durch geeignete Wahl der ionenspezifischen Membran können sowohl anionische als auch kationische Tenside gemessen werden. Ionenselektive Elektroden eignen sich aber auch zum Bestimmen der Konzentrationen von nichtionischen Tensiden. Dabei wird ein Titrationsverfahren durchgeführt, wobei eine starke Potentialänderung den Umschlagpunkt der Titration anzeigt. Durch Kenntnis des Umschlagpunktes wird auf die Konzentration anionischer, kationischer oder nichtionischer Tenside geschlossen.

Das Einsatzgebiet und die Leistungsfähigkeit der ionenselektiven Elektroden ist durch die Art der Membran bestimmt. Neben Festkörpermembran- und Flüssigmembranelektroden werden insbesondere zur Bestimmung von Tensidkonzentrationen Membranen aus nicht porösen Materialien wie z.B. PVC (Polyvinylchlorid) verwendet.

Allgemein bekannt sind ionenselektive Elektroden mit einer PVC Membran, welche Elektrodenkörper aus Metall, insbesondere Silber oder aus Graphit aufweisen, wobei die elektrische Verbindung zwischen Elektrodenkörper und Membrane oft durch eine leitfähige Flüssigkeit hergestellt wird.

Die EP 300 662 zeigt eine ionenselektive Elektrode zum Bestimmen von Tensidkonzentrationen, die aus einem Graphitkern besteht, welcher mit einer ionenspezifischen Membran (PVC mit einem Anteil einer elektroaktiven Substanz) beschichtet ist.

Das Arbeiten mit ionenselektiven Elektroden wird unter anderem auch durch Karl Cammann, "das Arbeiten mit ionenselektiven Elektroden", Springer Verlag, Berlin, Heidelberg, New York, 1977, gezeigt. Der Inhalt dieser Publikation wird durch Bezugnahme ausdrücklich in die vorliegende Beschreibung einbezogen.

Durch die DE 34 38 221 C2 ist ausserdem ein Verfahren zur Herstellung von modifizierten Kohlenstoffaserelektroden bekannt. Darin wird gezeigt, wie Kohlenstoffasern als Innensystem in mit einer Membran beschichteten ionenselektiven Elektroden verwendet werden können.

Die vorangehend genannten Elektrodenkörper von ionenselektiven Elektroden weisen alle bestimmte Nachteile auf. Silberelektroden weisen eine geringe mechanische Festigkeit auf, Graphitelektroden sind mechanisch nicht belastbar und elektrisch leitfähige Lösungen zur Verbindung von Elektrodenkörper und Membrane werfen Probleme hinsichtlich der Alterungsbeständigkeit der Elektroden auf. Das Verfahren zur Herstellung von modifizierten Kohlenstoffaserelektroden gemäss der DE 34 38 221 ist aufwendig und benötigt eine Vielzahl von verschiedenen Chemikalien.

Die Erfindung stellt sich zur Aufgabe, die Nachteile des Bekannten zu vermeiden, insbesondere eine sensitive ionenselektive Elektrode zum potentiometrischen Bestimmen von Konzentrationen eines bestimmten Ions in einer Lösung zu schaffen, welche gute mechanische und elektrische Eigenschaften aufweist, die einfach herzustellen ist und die mit kleiner Bauform hergestellt werden kann.

Eine weitere Aufgabe der Erfindung ist es, ein Verfahren zur Herstellung einer ionenselektiven Elektrode zu schaffen. Erfindungsgemäss werden diese Aufgaben mit einer ionenselektiven Elektrode sowie einem Verfahren zu ihrer Herstellung gemäss den Merkmalen der unabhängigen Ansprüche gelöst.

Eine ionenselektive Elektrode zum potentiometrischen Bestimmen der Konzentration eines bestimmten Ions in einer Lösung weist einen vorzugsweise zylindrischen Elektrodenkörper auf, der mit einer ionenspezifischen Membran beschichtet ist. Der Elektrodenkörper wird durch eine Vielzahl von Kohlenstoffasern gebildet, welche in einer Matrix, vorzugsweise einer Polymer-Matrix eingebettet sind. Zum Messen der Konzentration eines bestimmten Ions in einer Lösung wird die Elektrode in die Lösung getaucht und das durch die Elektrode gemessene elektrische Potential aufgezeichnet. Die ionenspezifische Membran ist derart aufgebaut, dass das auf ihrer Innenseite gemessene elektrische Potential nur von der Konzentration eines bestimmten Ions auf der Aussenseite der Membran abhängt. Dabei kann beispielsweise eine Membran aus einem Polymer verwendet werden, das eine elektroaktive Substanz (ionenaustauschende Verbindungen) enthält. Zum Bestimmen von Tensidkonzentrationen wird vorzugsweise eine PVC Membran verwendet, die als elektroaktive Substanz Tensidsalze enthält.

Es ist auch möglich, normale PVC Membranen ohne elektroaktive Substanzen zu verwenden. Dabei erzeugen ionische Unreinheiten in der Membran ionenspezifische Eigenschaften.

Durch die Verwendung von Kohlenstoffaser-Kunststoff für den Elektrodenkörper werden gute mechanische Eigenschaften der Elektrode erreicht. Damit mit dem Elektrodenkörper überhaupt ein Potential gemessen werden kann, müssen aber die Kohlenstoffasern in einem möglichst guten elektrischen Leitkontakt mit der Innenfläche der ionenspezifischen Membran stehen. Erfindungswesentlich ist, dass zum Erreichen des Leitkontakts die seitliche Oberfläche des Elektrodenkörpers unbeschichtete, freigelegte Faserabschnitte aufweist.

In einer bevorzugten Ausführungsform bestehen die freigelegten Faserabschnitte aus Faserenden, die aus der Polymer-Matrix hervorstehen. Durch den unbeschichteten, freigelegten Querschnitt der Faserenden wird der elektrische Leitkontakt mit der Innenfläche der ionenspezifischen Membran zusätzlich optimiert.

Vorzugsweise wird zum Einbetten der Kohlenstoffasern eine Matrix aus Epoxyd-Harz verwendet. Es kann aber auch Polyesterharz oder Polyimidharz verwendet werden.

Das Verfahren zum Herstellen einer erfindungsgemässen ionenselektiven Elektrode besteht hauptsächlich aus dem Bereitstellen eines Elektrodenkörpers aus in eine Polymer-Matrix integrierten Kohlenstoffasern, wobei der Elektrodenkörper an seiner Oberfläche freiliegende Abschnitte von Kohlenstoffasern aufweist. Der Elektrodenkörper wird derart mit einer ionenspezifischen Membran beschichtet, dass die freiliegenden Abschnitte der Kohlenstoffasern in elektrischem Leitkontakt mit der Innenfläche der Membran stehen.

In einem bevorzugten Ausführungsbeispiel wird eine Polymer-Matrix mit integrierten Kunststoffasern hergestellt, bei welcher die Kohlenstoffasern vorerst ganz innerhalb der Matrix liegen. In einem weiteren Arbeitsschritt wird die Oberfläche der Polymer-Matrix derart bearbeitet, dass Kohlenstoffaser-Abschnitte freigelegt werden. Die Oberflächenbearbeitung kann durch Aufrauhen mittels eines Schmirgelpapiers, durch Sandstrahlen, durch Einschneiden oder Einfräsen von Kerben oder Vertiefungen oder auch durch ganzes Entfernen der oberen Schichten der Polymer-Matrix erfolgen.

In einem alternativen Ausführungsbeispiel wird direkt ein Elektrodenkörper hergestellt, der auf seiner Aussenseite freiliegende Kohlenstoffaser-Abschnitte aufweist. Dazu kann ein sich in eine Richtung aufspreizendes Bündel von Kohlestoffasern radial nur teilweise in die Polymer-Matrix eingebettet werden, so dass die Endabschnitte der Kohlenstoffasern aus der Polymer-Matrix hervorragen.

Das Beschichten des Elektrodenkörpers mit der ionenspezifischen Membran geschieht vorzugsweise durch Eintauchen des Körpers in ein durch ein Lösungsmittel gelöstes Polymer, beispielsweise PVC. Um ionenspezifische Eigenschaften der Membran zu erreichen, wird dem gelösten Polymer eine elektroaktive Substanz, z.B. Tensidsalze, zugefügt. Alternativ kann die Membran aber auch aus Silikonkautschuk oder Kollodium bestehen.

Die Beschichtung des Elektrodenkörpers kann aber auch auf andere Weise, z.B. durch Streichen oder andere Überzugsverfahren erfolgen.

Die Erfindung ist im folgenden in einem Ausführungsbeispiel und anhand der Zeichnungen näher erläutert. Es zeigen:
- Figur 1: die schematische Darstellung einer erfindungsgemässen ionenselektiven Elektrode,
- Figur 2: einen Ausschnitt A aus Figur 1,
- Figur 3: eine schematische Darstellung eines abgewandelten Ausführungsbeispiels,
- Figur 4a bis 4d: schematische Darstellung des Herstellungsverfahrens für eine erfindungsgemässe Elektrode, und
- Figur 5a und 5b: alternative Verfahrensschritte.

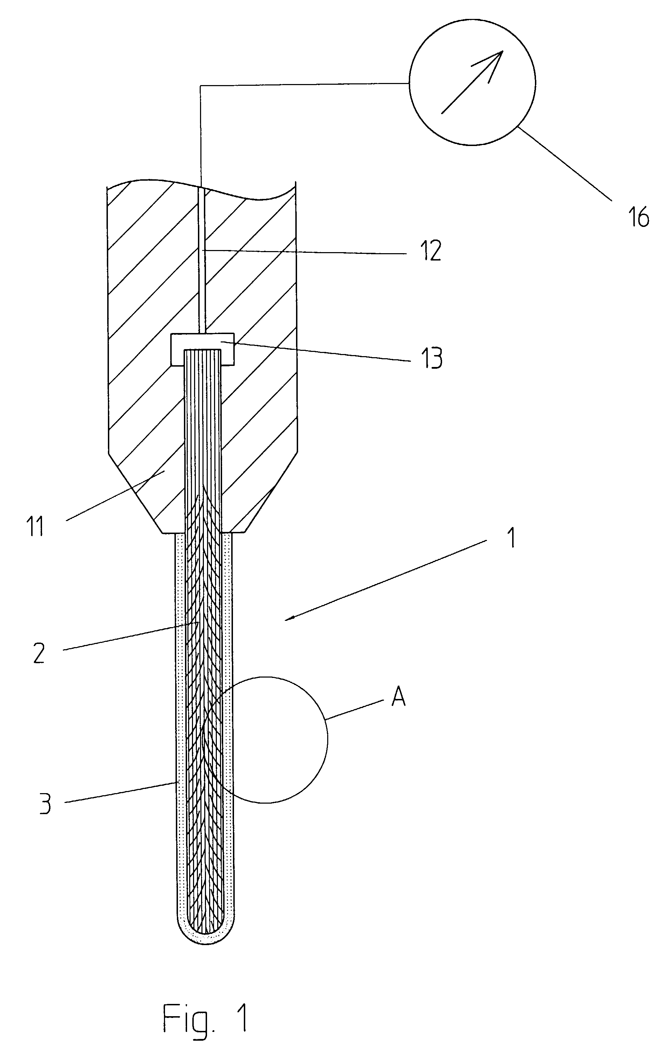

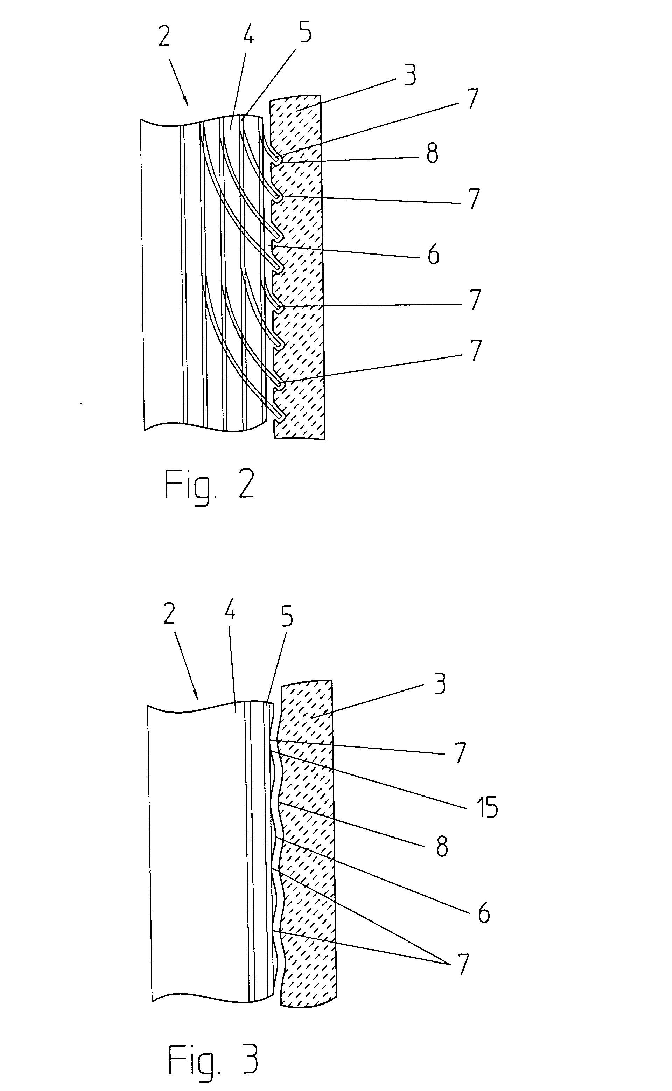

Figur 1 zeigt eine schematische Darstellung einer ionenselektiven Elektrode 1 in der Seitenansicht. Die ionenselektive Elektrode 1 besteht aus einem Elektrodenkörper 2, welcher von einer ionenspezifischen Membran 3 umschlossen ist. Der Elektrodenkörper 2 besteht aus einem Bündel von Kohlenstoffasern 5 (siehe Figur 2) welche in eine Polymer-Matrix 4 eingebettet sind. Der Elektrodenkörper 2 ist in seinem oberen Teil von einem Gehäuse umgeben. Der Elektrodenkörper 2 ist dicht in einem Halterungsteil 11 am unteren Teil des Gehäuses, beispielsweise mit Epoxyd-Harz eingeklebt. Der Elektrodenkörper 2 weist an seinem im Gehäuse liegenden Ende eine glatte Schnittfläche auf, so dass dort die Enden der Kohlenstoffasern frei liegen. Ein metallischer Kontaktschuh 13 steht in elektrischem Leitkontakt mit den Faserenden und ist über eine Ableitung 12 mit einem schematisch dargestellten Spannungsmessgerät 16 verbunden.

Die Polymer-Matrix 4 besteht beispielsweise aus Epoxyd-Harz. Die ionenspezifische Membran besteht aus einem Kunststoff, vorzugsweise PVC. Der Elektrodenkörper 2 weist auf seiner seitlichen Oberfläche 6 freiliegende Abschnitte 7 der Kohlenstoffasern 5 auf. Die Abschnitte 7 stehen in elektrischem Leitkontakt mit der Innenfläche 8 der ionenspezifischen Membran 3. Das Freilegen von Abschnitten der Kohlenstoffasern ist notwendig, damit das Potential auf der Innenseite 8 der Membran 3 über die Kohlenstoffasern 5 zum Kontaktschuh 13 geleitet werden kann. Vorzugsweise wird ein Bündel von etwa 40'000 Kohlenstoffasern verwendet, die einen durchschnittlichen Durchmesser von 7 Mikrometer und eine Länge von etwa 1 cm bis 100 cm aufweisen. Der Elektrodenkörper 2 hat eine Länge von 10 mm bis 100 mm, vorzugsweise 72 mm.

Die ionenspezifische Membran weist eine Dicke von ungefähr 0,2 mm auf.

Auf der dem Kontaktschuh 13 gegenüberliegenden Seite ist der Elektrodenkörper 2 ebenfalls durch eine Schnittfläche begrenzt, so dass die Faserenden freiliegen.

Figur 2 zeigt schematisch den vergrösserten Ausschnitt A aus Figur 1. Der Elektrodenkörper 2 weist auf seiner seitlichen Oberfläche 6 freiliegende Abschnitte 7 der Kohlenstoffasern 5 auf. Die Kohlenstoffasern 5 stehen von der Oberfläche der Polymer-Matrix 4 vor, so dass ihre Enden die freiliegenden Abschnitte 7 bilden. Die ionenspezifische Membran 3 steht mit ihrer Innenfläche 8 in elektrischem Leitkontakt mit den freiliegenden Abschnitten 7.

Figur 3 zeigt schematisch einen Ausschnitt aus dem Elektrodenkörper 2 eines abgewandelten Ausführungsbeispiels. Die freiliegenden Abschnitte 7 der Kohlenstoffasern 5 an der seitlichen Oberfläche 6 des Elektrodenkörpers 2 werden nicht durch die Enden der Kohlenstoffasern 5 gebildet. Die Kohlenstoffasern 5 sind durchgehend und werden durch entsprechende Vertiefungen oder Aussparungen 15 in der seitlichen Oberfläche 6 des Elektrodenkörpers 2 freigelegt.

Beim Verfahren zum Herstellen einer vorangehend beschriebenen ionenselektiven Elektrode wird ein Elektrodenkörper 2 bereitgestellt, der aus einer Polymer-Matrix 4 mit darin eingebetteten Kohlenstoffasern 5 besteht (siehe Figur 4a). Die Oberfläche 6 des Elektrodenkörpers 2 wird einer mechanischen Bearbeitung unterzogen, so dass Abschnitte 7 der Kohlenstoffasern 5 freigelegt werden.

Figur 4b zeigt schematisch, wie der Elektrodenkörper 2 über eine rauhe Fläche 14 geführt wird, so dass seine seitliche Oberfläche 6 angerauht wird und Abschnitte der Kohlenstoffasern freigelegt werden. Die beiden im wesentlichen senkrecht zur Axialrichtung stehenden Begrenzungsflächen werden durch Schnitte gebildet und legen so die Anfänge, beziehungsweise die Ende der Kunststoffasern frei.

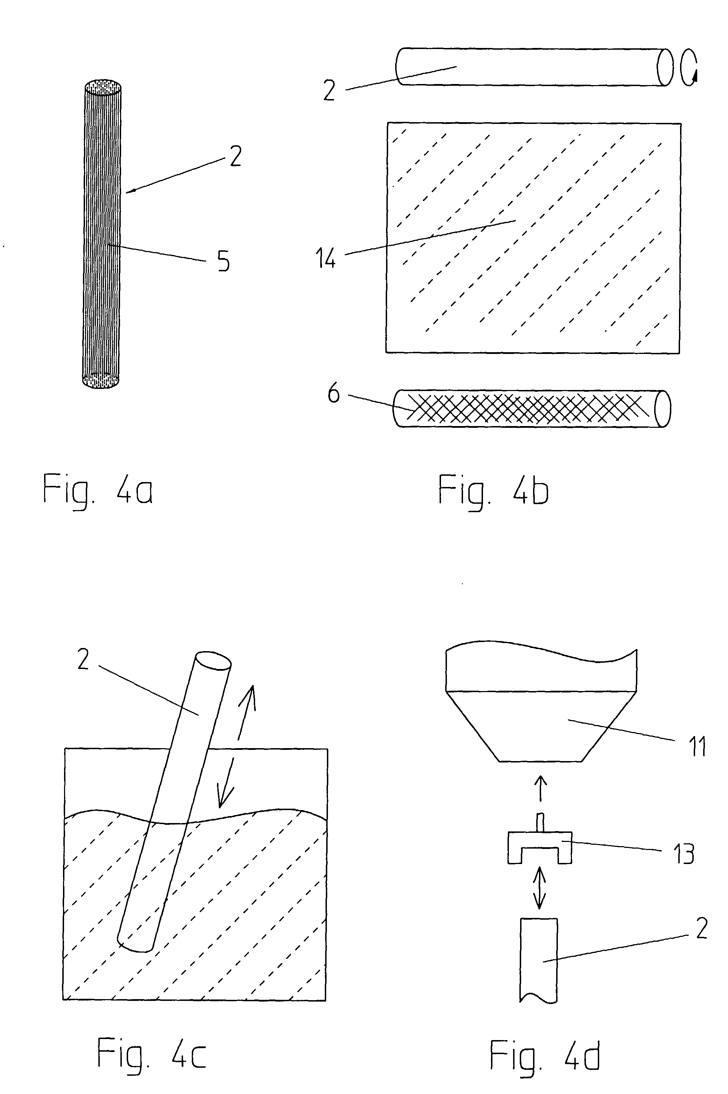

In einem nächsten Verfahrensschritt (Figur 4c) wird der Elektrodenkörper 2 in ein Bad aus einem in einem Lösungsmittel gelösten Polymer getaucht. Dadurch lagert sich eine Polymerschicht um den Elektrodenkörper ab. Vorzugsweise wird PVC (Polyvinylchlorid) verwendet, welches in Tetrahydrofuran gelöst ist. Damit die Polymerschicht ionenspezifische Eigenschaften erhält, wird die PVC-Lösung mit einer elektroaktiven Substanz angereichert. Dazu eignen sich insbesondere Tensidsalze. Der in Figur 4c gezeigte Verfahrensschritt kann mehrmals wiederholt werden, bis die Polymerschicht die gewünschte Dicke erreicht. Bei der Beschichtung muss darauf geachtet werden, dass der Elektrodenkörper 2 nur teilweise beschichtet wird, so dass mindestens die eine, senkrecht zur Achse stehende Fläche unbeschichtet bleibt. Der so beschichtete Elektrodenkörper 2 wird in einem letzten Verfahrensschritt in ein Gehäuse 11 eingeleimt und auf der unbeschichteten, senkrecht zur Achse stehenden Fläche mit einem Kontaktschuh 13 versehen (siehe Figur 4d).

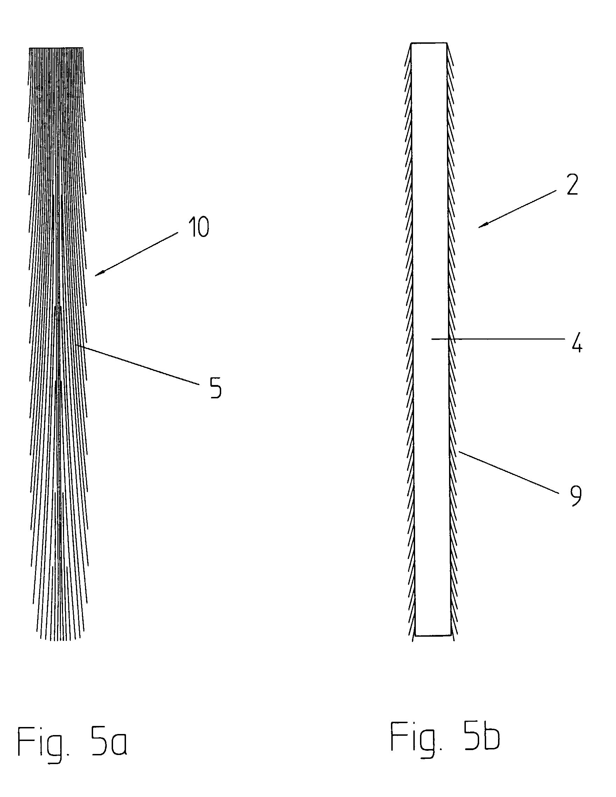

Der in Figur 4b gezeigte Arbeitsschritt kann weggelassen werden, wenn von Anfang an ein Elektrodenkörper 2 hergestellt wird, der an seiner Oberfläche freiliegende Abschnitte der Kohlenstoffasern aufweist. Dazu wird ein Bündel 10 von Kohlenstoffasern 5 verwendet, die sich in eine Richtung aufspreizen (siehe Figur 5a). Das Faserbündel 10 wird derart in eine Polymer-Matrix 4 eingebettet, dass radial nur ein Teil des Faserbündels 10 innerhalb der Matrix 4 liegt. So wird ein Elektrodenkörper 2 hergestellt, bei welchem die Enden 9 der Kohlenstoffasern 5 von der Oberfläche 6 vorstehen. Die weiteren Verfahrensschritte sind analog zu den in Figur 4c und 4d gezeigten.

## Patentansprüche

1. Ionenselektive Elektrode (1) zum potentiometrischen Bestimmen der Konzentration eines bestimmten Ions in einer Lösung, mit einem Elektrodenkörper (2), welcher wenigstens teilweise mit einer ionenspezifischen Membran (3) beschichtet ist, dadurch gekennzeichnet, dass der Elektrodenkörper (2) aus einer Polymer-Matrix (4) mit integrierten Kohlenstoffasern (5) besteht, wobei die seitliche Oberfläche (6) des Elektrodenkörpers (2) freiliegende Faserabschnitte (7) aufweist, die in elektrischem Leitkontakt mit der Innenfläche (8) der ionenspezifischen Membran (3) stehen.

2. Ionenselektive Elektrode nach Anspruch 1, dadurch gekennzeichnet, dass die freiliegenden Faserabschnitte (7) durch von der seitlichen Oberfläche (6) vorstehende Faserenden gebildet werden.

3. Ionenselektive Elektrode nach Anspruch 1, dadurch gekennzeichnet, dass die seitliche Oberfläche (6) Vertiefungen (15) aufweist, welche Faserabschnitte (7) freilegen.

4. Ionenselektive Elektrode nach einem der Ansprüche 1 bis 3, dadurch gekennzeichnet, dass die ionenspezifische Membran aus einem Polymer besteht.

5. Ionenselektive Elektrode nach Anspruch 4, dadurch gekennzeichnet, dass die Membran aus PVC besteht und einen Anteil einer elektroaktiven Substanz enthält.

6. Ionenselektive Elektrode nach Anspruch 5, dadurch gekennzeichnet, dass die elektroaktive Substanz aus einem Tensidsalz besteht.

7. Verfahren zum Herstellen einer ionenselektiven Elektrode (1), gekennzeichnet durch folgende Schritte:
- Bereitstellen eines Elektrodenkörpers (2) aus in eine Polymer-Matrix (4) integrierten Kohlenstoffasern (5), wobei die Kohlenstoffasern (5) an der Oberfläche (6) der Polymer-Matrix (4) freiliegende Abschnitte (7) aufweisen;
- Beschichten des Elektrodenkörpers (2) mit einer ionenspezifischen Membran (3).

8. Verfahren zum Herstellen einer ionenselektiven Elektrode, gekennzeichnet durch folgende Schritte:
- Bereitstellen eines Elektrodenkörpers (2) aus in eine Polymer-Matrix (4) integrierten Kohlenstoffasern (5);
- Freilegen von Faserabschnitten (7) an der seitlichen Oberfläche (6) des Elektrodenkörpers (2);
- Beschichten des Elektrodenkörpers (2) mit einer ionenspezifischen Membran (3).

9. Verfahren nach Anspruch 7, dadurch gekennzeichnet, dass ein sich in eine Richtung aufspreizendes Kohlenstoffaser-Bündel (10) radial nur teilweise in eine Polymer-Matrix (4) integriert wird, so dass die Oberfläche der Polymer-Matrix (4) vorstehende Faserenden (9) aufweist.

10. Verfahren nach Anspruch 8, dadurch gekennzeichnet, dass die Abschnitte (7) der Kohlenstoffasern (5) durch Aufrauhen der Oberfläche (6) des Elektrodenkörpers (4) freigelegt werden.

11. Verfahren nach Anspruch 8, dadurch gekennzeichnet, dass die Abschnitte (7) der Kohlenstoffasern (5) durch Schneiden oder Fräsen von Vertiefungen (15) freigelegt werden.

12. Verfahren nach Anspruch 8, dadurch gekennzeichnet, dass die Abschnitte (7) der Kohlenstoffasern (5) durch Entfernen einer Deckschicht des Elektrodenkörpers (2) freigelegt werden.

13. Verfahren nach einem der Ansprüche 7 bis 12, dadurch gekennzeichnet, dass der Elektrodenkörper (2) durch Eintauchen in ein gelöstes Polymer, welches mit einer elektroaktiven Substanz versehen ist, beschichtet wird.

14. Verfahren nach Anspruch 13, dadurch gekennzeichnet, dass als Polymer PVC verwendet wird, und dass das PVC in Tetrahydrofuran gelöst wird.
